# EUROPEAN PATENT SPECIFICATION

(11) **EP 2 854 010 B1**
(45) Date of publication and mention of the grant of the patent: **04.10.2017**
(21) Application number: 14180361.9
(22) Date of filing: 08.08.2014
(51) Int. Cl.: G06F 3/0488, G06F 3/0482, G06F 3/0484

(54) **Method and apparatus for displaying messages**
Verfahren und Vorrichtung zur Anzeige von Nachrichten
Procédé et appareil pour afficher des messages

(30) Priority: 29.09.2013 CN 201310456270
(43) Date of publication of application: 01.04.2015
(73) Proprietor: Xiaomi Inc., Beijing 100085 (CN)
(72) Inventor: Liu, Daokuan, Haidian District, Beijing (CN); Zhang, Xu, Haidian District, Beijing (CN); Weng, Haibin, Haidian District, Beijing (CN); Wang, Bin, Haidian District, Beijing (CN)
(74) Representative: Hanna Moore + Curley

(56) References cited:
- EP-A1- 2 584 440
- EP-A1- 2 629 452
- US-A1- 2008 270 886
- US-A1- 2010 088 641
- US-A1- 2013 227 705

## Description

### TECHNICAL FIELD

The present disclosure relates to the field of terminal technology, and more particularly to a method, an apparatus and a terminal device for displaying messages.

### BACKGROUND

Messages in computers, mobile terminals, and various social communicating tools over a network are the most popular and most important means of communication in the information age. For instance, messages in a computer include chatting messages in an instant messaging software installed and used in the computer, email messages in an email client, and the like; messages in a mobile terminal include short messages, multimedia messages, messages in an instant messaging client, email messages in an email client, and the like; there also may be messages over a network such as messages of a webpage chat interface.

As for how to display messages, one approach is to display all the messages piece by piece in sequence of receiving time on a message display interface, and then after a user selects one message from the sequence, to display the selected message on the message display interface. Another approach commonly adopted is to display the messages sorted according to different contact persons from/to whom the messages are received/sent. Thus, contact persons from/to whom the messages were received/sent are displayed on the message display interface. Then, after the user selects one of the contact persons, messages received/sent between the user and the selected contact person may be displayed in a time sequence on the message display interface.

The relevant state of the art is represented by US 2013/227705 A1, US 2008/270886 A1 and EP 2584440 A1.

However, through these approaches of displaying messages, messages can only be displayed in a time sequence, but can't be processed by the user.

### SUMMARY

In view of the above, the present invention provides a method, an apparatus and a terminal device for displaying messages in accordance with claims which follow, that is capable of providing for processing of messages by the user.

According to the first aspect of the embodiments of the present disclosure, there is provided a method for displaying messages. The method comprises the following steps:
detecting a first preset gesture containing two endpoints which is acted on a message display page interface; and
causing processing of messages displayed between the two endpoints in the message display page.

The solution provided by the embodiments of the present disclosure may have the following advantageous effect: through the present disclosure, a flexible process may be provided for the user by detecting a preset gesture acted on the message display page and causing processing and manipulation of the messages displayed in the message display page.

In one embodiment, the first preset gesture comprises: a gesture of inward kneading with two fingers, a gesture of click with two fingers, or a gesture of unidirectional sliding.

In a preferred embodiment, the processing of messages between the two endpoints in the message display page comprises:
hiding the messages between the two endpoints in the message display page; or,
deleting the messages between the two endpoints in the message display page; or,
merging for displaying the messages between the two endpoints in the message display page.

In one embodiment, the hiding the messages between the two endpoints in the message display page comprises: folding for displaying the messages between the two endpoints in the message display page.

In one embodiment, in the case that the processing of messages between the two endpoints in the message display page is performed by hiding the messages between the two endpoints in the message display page, the method further comprises:
receiving a second preset gesture which is acted on the message display page in which the messages are hidden; and
displaying the hidden messages in the message display page.

In one embodiment, the second preset gesture comprises: a gesture of outward kneading with two fingers, a gesture of click, or a gesture of long press.

According to the second aspect of the embodiments of the present disclosure, there is provided an apparatus for displaying messages. The apparatus comprises:
a first detection module, configured to detect a first preset gesture containing two endpoints which is acted on a message display page; and
a first process module, configured to process messages between the two endpoints in the message display page.

In one embodiment, the first preset gesture comprises: a gesture of inward kneading with two fingers, a gesture of click with two fingers, or a gesture of unidirectional sliding.

In one embodiment, the first process module comprises:
a first process unit, configured to hide the messages between the two endpoints in the message display page, or
a second process unit, configured to delete the messages between the two endpoints in the message display page, or
a third process unit, configured to merge for displaying the messages between the two endpoints in the message display page.

In one embodiment, the first process unit is configured to fold for displaying the messages between the two endpoints in the message display page.

In one embodiment, the apparatus further comprises:
a second detection module, configured to detect a second preset gesture that is acted on the message display page in which the messages are hidden; and
a second process module, configured to display the hidden messages in the message display page.

In one embodiment, the second preset gesture comprises: a gesture of outward kneading with two fingers, a gesture of click, or a gesture of long press.

According to the third aspect of the embodiments of the present disclosure, there is provided a terminal device, which comprises a memory and one or more programs stored in the memory, and the terminal device is configured to execute the one or more programs by one or more processors, the one or more programs containing instructions to perform the following operations:
receiving and detecting a first preset gesture containing two endpoints on a message display page; and
processing messages between the two endpoints in the message display page.

According to the fourth aspect of the embodiments of the present disclosure, there is provided a program product having stored therein instructions that, when executed by one or more processors of a terminal, causes the terminal to perform:
receiving and detecting a first preset gesture containing two endpoints on a message display page; and
processing messages between the two endpoints in the message display page.

Other characteristics and advantages of the present disclosure will be set forth in the following description, and will in part become apparent from the description, or may be appreciated through the practice of the present disclosure. The objects and other advantages of the present disclosure may be realized and obtained through the structures particularly pointed out in the written description, the claims and the accompanying drawings.

It should be appreciated that, the above general description and the detailed description below are merely exemplary. The technical solution of the present disclosure will be described in a further detail with reference to accompanying drawings and embodiments.

### BRIEF DESCRIPTION OF THE DRAWINGS

The accompanying drawings which are incorporated in and constitute a part of the description, illustrate embodiments according to the present disclosure, and serve to explain the principle of the present disclosure together with the description.

In the drawings:
Fig.1 is a flowchart showing a method for displaying messages according to an exemplary embodiment;
Fig.2 is a flowchart showing a method for displaying messages according to another exemplary embodiment;
Fig.3 is a schematic view showing a message display page in which messages are sorted by contact persons according to an exemplary embodiment;
Fig.4 is a schematic view showing a gesture of inward kneading with two fingers that is acted on the message display page shown in Fig.3 according to an exemplary embodiment;
Fig.5 is a schematic view showing a resulting message display page by hiding messages shown in Fig.3 according to an exemplary embodiment;
Fig.6 is a schematic view showing a gesture of click with two fingers that is acted on the message display page shown in Fig.3 according to an exemplary embodiment;
Fig.7 is a schematic view showing a sliding gesture that is acted on the message display page shown in Fig.3 according to an exemplary embodiment;
Fig.8 is a flowchart showing a method according to an exemplary embodiment;
Fig.9 is a schematic view showing a message display page in which detailed messages with a contact person are displayed according to an exemplary embodiment;
Fig.10 is a schematic view showing a gesture of inward kneading with two fingers that is acted on the message display page shown in Fig.9 according to an exemplary embodiment;
Fig.11 is a schematic view showing a resulting message display page by hiding messages shown in Fig.9 according to an exemplary embodiment;
Fig.12 is a schematic view showing a resulting message display page by merging and displaying messages shown in Fig.9 according to an exemplary embodiment;
Fig.13 is a schematic view showing a kneading gesture that is acted on a message display page according to an exemplary embodiment;
Fig.14 is a schematic view showing a resulting message display page by merging and displaying the messages shown in Fig.13 according to an exemplary embodiment;
Fig.15 is a schematic view showing a resulting message display page by folding and displaying the messages shown in Fig.10 according to an exemplary embodiment;
Fig.16 is a schematic view showing a gesture of outward kneading with two fingers that is acted on the message display page shown in Fig.15 according to an exemplary embodiment;
Fig.17 is a schematic view showing a gesture of click or long press that is acted on the message display page shown in Fig.15 according to an exemplary embodiment;
Fig.18 is a flowchart showing a method for displaying part of a message according to an exemplary embodiment;
Fig.19 is a schematic view showing a first page after dividing a message into pages for displaying according to an exemplary embodiment;
Fig.20 is a schematic view showing a detection on a sliding gesture of the user according to an exemplary embodiment;
Fig.21 is a schematic view showing a page flipping according to a sliding gesture of the user according to an exemplary embodiment;
Fig.22 is a schematic view showing a next message display page resulted from the flip operation according to an exemplary embodiment;
Fig.23 is a schematic block diagram showing an apparatus for displaying messages according to an exemplary embodiment;
Fig.24 is a schematic block diagram showing an apparatus for displaying messages according to another exemplary embodiment;
Fig.25 is a schematic block diagram showing a terminal device according to an exemplary embodiment.

Explicit embodiments of the present disclosure that have been illustrated in the above drawings will be described in more detail hereinafter. These drawings and literal description are by no means intended to explain the concept of the present disclosure to those skilled in the art with reference to particular embodiments.

### DETAILED DESCRIPTION

In order to make the objects, the technical solutions and advantages more clear, the present disclosure will be described in a further detail with reference to the embodiments.

A method for displaying messages is provided by the embodiments of the present disclosure, which may be described in detail with reference to the accompany drawings.

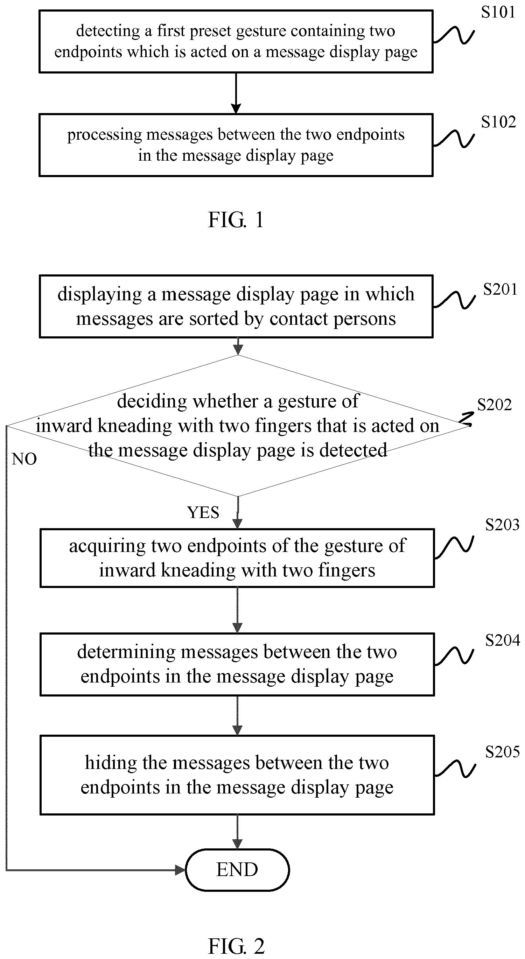

In one embodiment, as shown in Fig.1, the method for displaying messages includes the following steps.

In step S101, a first preset gesture containing two endpoints which is acted on a message display page is detected.

Specifically, the first preset gesture includes: a gesture of inward kneading with two fingers, a gesture of click with two fingers, or a gesture of unidirectional sliding.

In the case that the first preset gesture is the gesture of inward kneading with two fingers, the two endpoints are located at starting points of the two fingers respectively; in the case that first preset gesture is the gesture of click with two fingers, the two endpoints are located at click locations of the two fingers respectively; and in the case that the first preset gesture is the gesture of unidirectional sliding, the two endpoints are located at a starting point and a final point of the sliding gesture respectively.

In step S102, messages between the two endpoints in the message display page are processed.

Specifically, the process step may include but not limited to, for example, one of the following: hiding the messages between the two endpoints in the message display page; or, deleting the messages between the two endpoints in the message display page; or, deleting spaces or carriage-return characters in the messages between the two endpoints in the message display page.

In the method for displaying messages according to the embodiments of the present disclosure, a flexible process may be provided for the user by detecting the preset gesture acted on the message display page and causing processing of the messages displayed in the message display page.

As shown in Fig.2, another embodiment of the method for displaying messages is provided. In the embodiment, the method for displaying messages according to the present disclosure is explained with reference to an example in which messages are hidden by receiving a gesture of inward kneading with two fingers. The method includes the following steps.

In step S201, a message display page in which messages are sorted by contact persons is displayed.

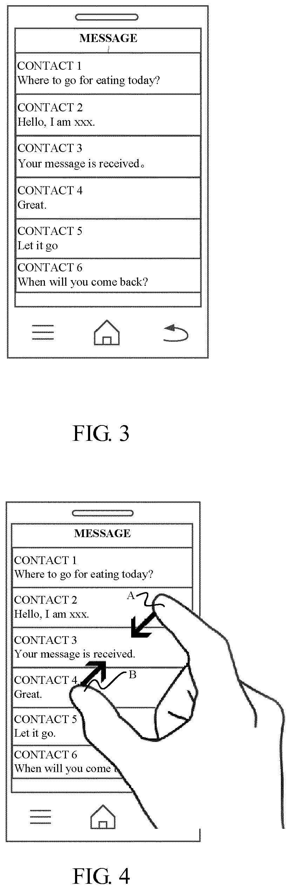

In this embodiment, a list of contact persons from/to whom messages are received/sent by the user is displayed in the message display page, as shown in Fig.3.

In step S202, it is decided whether a gesture of inward kneading with two fingers that is acted on the message display page is detected. If it is decided that the gesture is detected, step S203 is performed; or if it is decided that the gesture is not detected, the process is finished.

In step S203, two endpoints of the gesture of inward kneading with two fingers are acquired.

Fig.4 is a schematic view showing a gesture of inward kneading with two fingers that is acted on the message display page, in which starting points of the two fingers are the two endpoints A and B, respectively.

In step S204, the messages between the two endpoints in the message display page are determined.

In this embodiment, messages corresponding to the endpoint A are messages concerning a contact person 2, and messages corresponding to the endpoint B are messages concerning a contact person 4. Thus, the messages between the endpoint A and the endpoint B are the messages concerning the contact persons 2 to 4.

In step S205, the messages between the two endpoints in the message display page are hidden.

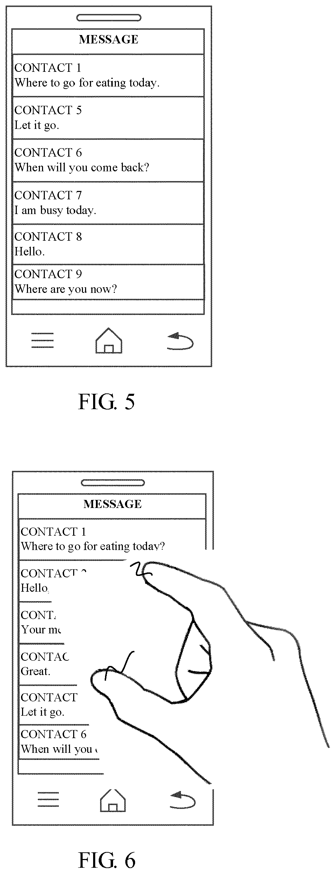

Fig.5 shows the resulting message display page by hiding the messages between the endpoints A and B.

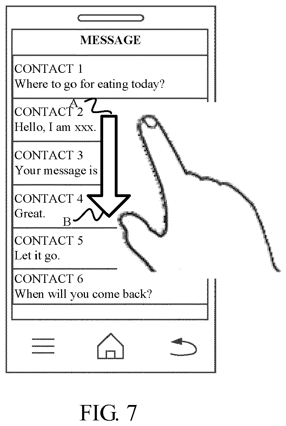

In other embodiments of the present disclosure, messages may also be hidden by detecting a gesture of click with two fingers or a gesture of unidirectional sliding. Fig.6 is a schematic view showing a gesture of click with two fingers that is acted on the message display page. As shown in Fig.6, the click with two fingers may be simultaneously acted on the screen, and the two endpoints are A and B respectively, as shown in the drawing. Then the messages between A and B are hidden, and the resulting message display page is as shown in Fig.5. Fig.7 is a schematic view showing a gesture of unidirectional sliding that is acted on the message display page, in which the direction of the gesture of unidirectional sliding is shown by an arrow in the drawing, and the starting point and the final point of the gesture of unidirectional sliding are endpoints A, B respectively. Then the messages between A and B are hidden, and the resulting message display page is also as shown in Fig.5.

In this embodiment, messages in the message display page in which messages are sorted by contact persons may be hidden by the gesture of inward kneading with two fingers, allowing the user to hide unimportant, undesired, or obsolescent messages of contact persons and browse desired messages of contact persons more conveniently and quickly.

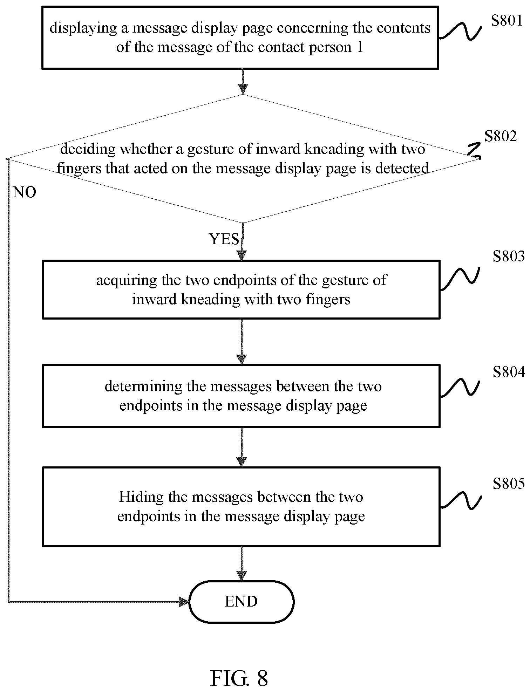

In another embodiment of the present disclosure, the method for displaying messages is realized in a message display page in which specific contents of a message are displayed, as shown in Fig.8. The method includes the following steps.

In step S801, a message display page containing contents of a message concerning a contact person 1 is displayed.

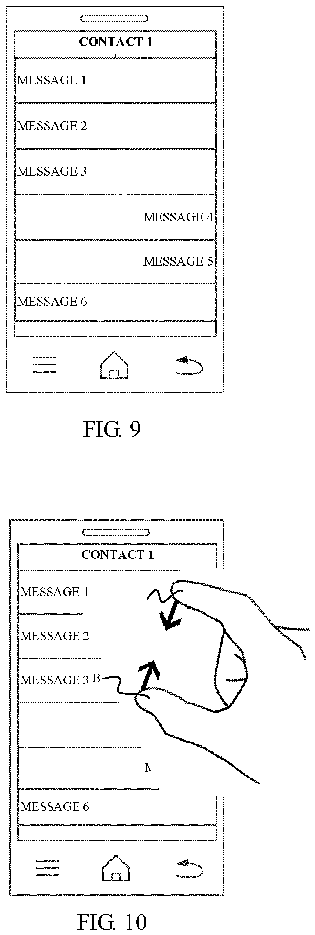

In this embodiment, in the message display page, messages between the user and the contact person 1 are displayed in the time sequence, as shown in Fig.9. Specifically, the messages 1, 2, 3 and 6 are messages received by the user from the contact person 1, and the messages 4 and 5 are messages sent by the user to the contact person 1.

In step S802, it is decided whether a gesture of inward kneading with two fingers that is acted on the message display page is detected. If it is decided that the gesture is detected, step S803 is performed; or if it is decided that the gesture is not detected, the process is finished.

In step S803, two endpoints of the gesture of inward kneading with two fingers are acquired.

Fig.10 is a schematic view showing a gesture of inward kneading with two fingers that is acted on the message display page, in which starting points of the two fingers are the two endpoints A and B, respectively.

In step S804, the messages between the two endpoints in the message display page are determined.

In this embodiment, message corresponding to the endpoint A is the message 1, and message corresponding to the endpoint B is the message 3. Thus, the messages between the endpoint A and the endpoint B are the messages 1 to 3.

In step S805, the messages between the two endpoints in the message display page are hidden.

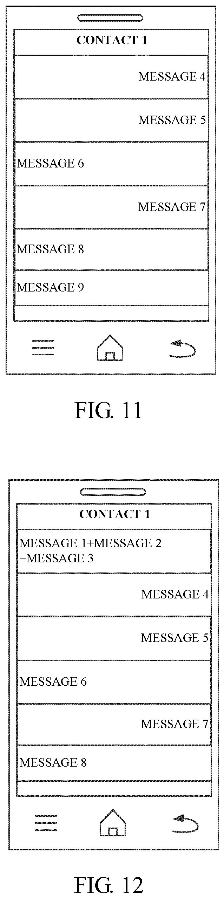

Fig.11 shows the resulting message display page by hiding the messages between the endpoints A and B.

In other embodiments of the present disclosure, messages may also be hidden by receiving a gesture of click with two fingers or a gesture of unidirectional sliding.

In this embodiment, messages in the message display page in which the contents of the message are displayed may be hidden according to the gesture of inward kneading with two fingers, allowing the user to hide unimportant and undesired messages and browse desired messages more conveniently and quickly.

In another embodiment of the present disclosure, in the case that the method for displaying messages is realized in a message display page in which contents of a message are displayed, when the two endpoints of the first preset gesture fall on a same piece of message, contents of that piece of message between the two endpoints are hidden.

In other embodiments of the present disclosure, in addition to hiding the messages between the two endpoints in the message display page, messages between the two endpoints may also be directly deleted, or merged for displaying.

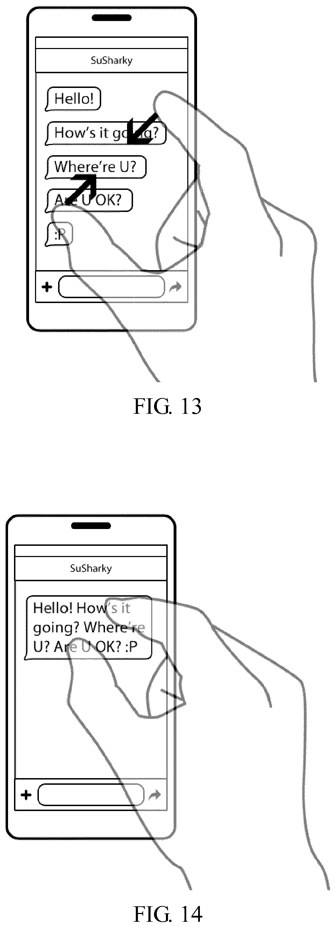

Fig.12 is a schematic view showing the message display page in which the messages 1, 2 and 3 are merged for displaying after a gesture of inward kneading shown in Fig. 10 is detected. Figs. 13 and 14 show a same example, in which Fig.13 shows a kneading gesture and Fig.14 shows the resulting message display page by merging the messages shown in Fig.13 after the kneading gesture is detected. The advantageous effect of this embodiment may be expressed more clearly by the example shown in Figs. 13 and 14. Sometimes, merging messages for displaying may simplify the message display interface for the user to browse.

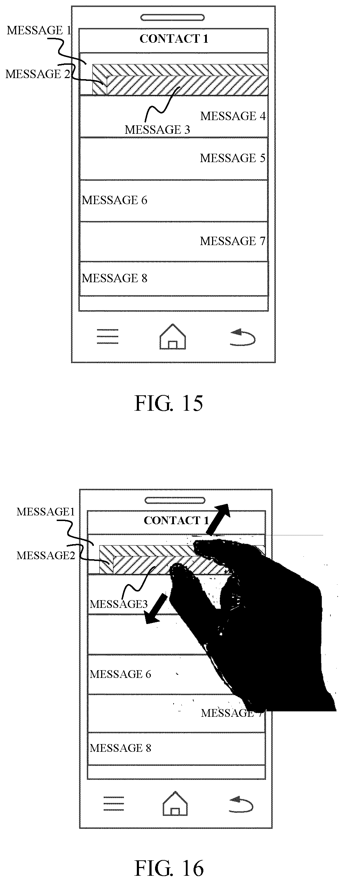

In other embodiments of the present disclosure, messages may be hidden in a manner of folding for displaying the messages, as shown in Fig.15, which shows the resulting message display page by folding the messages 1, 2 and 3 in Fig. 10.

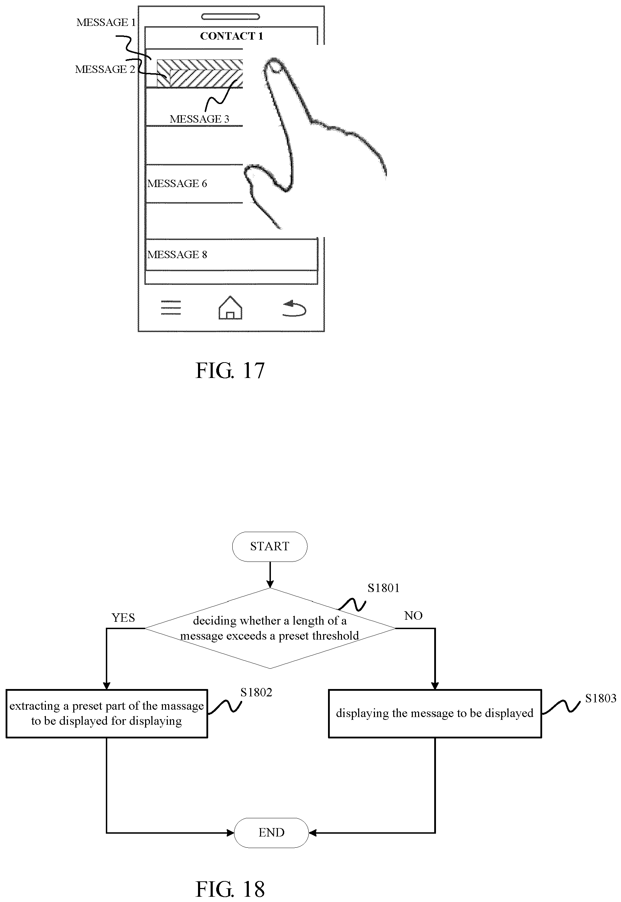

When the messages are hidden, the hidden messages may also be displayed upon detecting a second preset gesture. Specifically, the second preset gesture may include, for example, a gesture of outward kneading with two fingers, a gesture of click, or a gesture of long press. Fig.16 is a schematic view showing a gesture of outward kneading with two fingers that is acted on the message display page shown in Fig.15; Fig.17 is a schematic view showing a gesture of click or long press that is acted on the message display page shown in Fig.15. The message display page shown in Fig.15 will become the message display page shown in Fig.9 after the second preset gesture shown in Fig.16 or Fig. 17 is received.

In another embodiment of the present disclosure, if a length of a message exceeds a size of the display screen, the message may further be divided into pages. As shown in Fig.18, the method includes the following steps.

In step S1801, it is decided whether a length of a message exceeds a preset threshold. If it is decided that it exceeds the preset threshold, step S1802 is performed; or if it is decided that it does not exceed the preset threshold, the process is finished.

Specifically, the message may include pictures and videos as well as texts.

The preset threshold may be set as a number of characters or a value of areas that may be displayed under the current resolution of the terminal screen.

In step S1802, a preset part of the massage to be displayed is extracted for displaying.

The preset part may be set in advance. For example, in the case that the message includes a text, only contents in the first line of the message will be displayed. In the case that the message includes a picture, only the first 10 pixels ×10 pixels part of the picture will be displayed.

In step S1803, the message to be displayed is displayed.

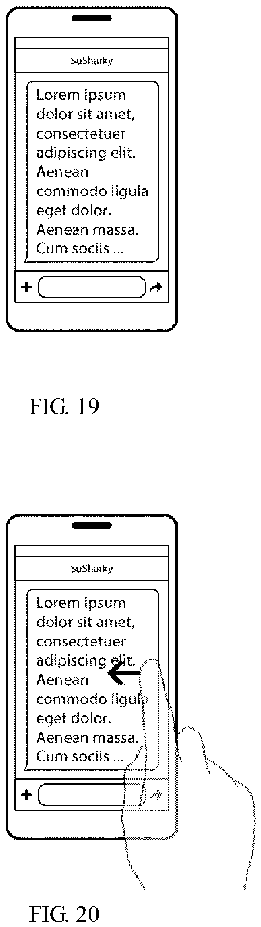

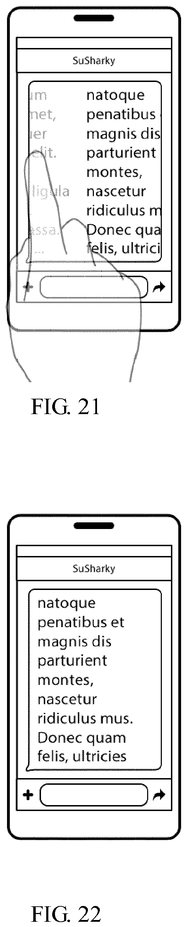

In other embodiments of the present disclosure, the remaining part of the message to be displayed may further be divided in pages for displaying, and the pages may be flipped upon detecting a gesture of sliding or click of the user. Fig.19 is a schematic view showing a first page after dividing a message into pages for displaying. Fig.20 is a schematic view showing a page on which a sliding gesture of the user is detected. Fig.21 is a schematic view showing a page flipping according to a sliding gesture of the user. Fig.22 is a schematic view showing a next message display page resulted from the flip operation.

Likewise, for the message display page among the plurality of pages in which the message is divided to be displayed, the abovementioned operation of detecting the first preset gesture containing two endpoints, and then processing the messages between the two endpoints in the message display page, may also be performed.

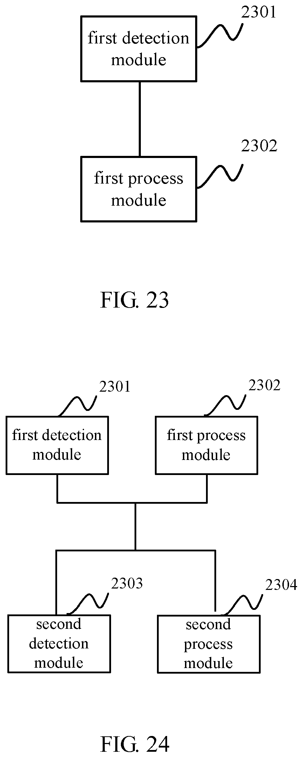

An apparatus for displaying messages is provided by the embodiments of the present disclosure, as shown in Fig.23. The apparatus includes:
a first detection module 2301, configured to detect a first preset gesture containing two endpoints that is acted on a message display page; and
a first process module 2302, configured to process messages between the two endpoints in the message display page.

Specifically, the first preset gesture includes: a gesture of inward kneading with two fingers, a gesture of click with two fingers, or a gesture of sliding.

The first process module 2302 includes:
a first process unit, configured to hide the messages between the two endpoints in the message display page, or
a second process unit, configured to hide the messages between the two endpoints in the message display page, or
a third process unit, configured to merge for displaying the messages between the two endpoints in the message display page.

The first process unit is configured to fold for displaying the messages between the two endpoints in the message display page.

As shown in Fig.24, the apparatus further includes:
a second detection module 2303, configured to detect a second preset gesture that is acted on the message display page in which messages are hidden; and
a second process module 2304, configured to display the hidden messages in the message display page.

The second preset gesture includes a gesture of outward kneading with two fingers, a gesture of click, or a gesture of long press.

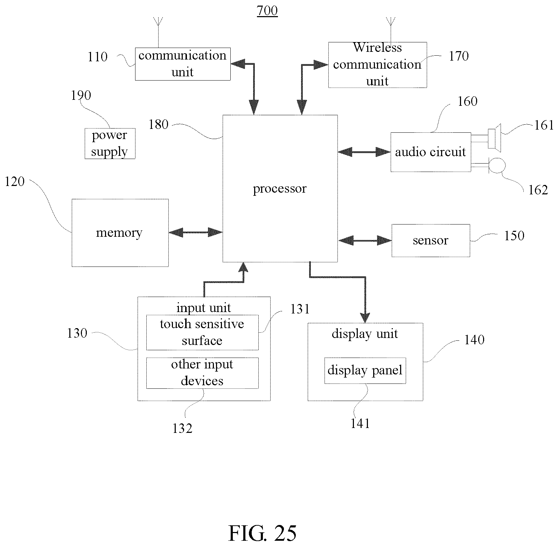

A terminal device is further provided by the present disclosure. Referring to Fig.25, the terminal device that is configured to perform the method for displaying messages may be a mobile phone, a tablet pad, a wearable mobile terminal such as a smart watch, and the like.

The terminal device 700 may include a communication unit 110, a memory 120 including one or more computer-readable storage medium, an input unit 130, a display unit 140, a sensor 150, an audio circuit 160, a WiFi (Wireless Fidelity) module 170, a processor 180 including one or more processing cores, and a power supply 190 and other components. It should be appreciated by those skilled in the art that, the structure of the terminal device shown in Fig. 25 does not impose a limitation to the terminal device, and it may include more or less components than what is illustrated, or combine some of the components, or have different component arrangements.

The communication unit 110 may be configured to transmit and receive information, or to transmit and receive signal during a procedure of calling. The communication unit 110 may be a network communication device such as a RF (Radio Frequency) circuit, a router, a modem, etc. In particular, when the communication unit 110 is a RF circuit, the communication unit 110 receives downlink information from a base station, and then transfers the information to one or more processors 180for process. Also, the communication unit 110 transmits uplink data to the base station. Generally, the RF circuit serving as a communication unit includes but not limited to an antenna, at least one amplifier, a tuner, one or more oscillators, a subscriber identity module (SIM) card, a transceiver, a coupler, an LNA (Low Noise Amplifier), and a duplexer, etc. Furthermore, the communication unit 110 may communicate with a network and other devices through wireless communication. The wireless communication may be implemented using any communication standards or protocols, including but not limited to GSM (Global System of Mobile communication), GPRS (General Packet Radio Service), CDMA (Code Division Multiple Access), WCDMA (Wideband Code Division Multiple Access), LTE (Long Term Evolution), e-mail, and SMS (Short Messaging Service), etc. The memory 120 may be configured to store software programs and modules. The processor 180 performs various functional applications and data processing by running the software programs and modules stored in the memory 120. The memory 120 may mainly include a program storage area and a data storage area, wherein the program storage area may be configured to store operating systems, and application programs required by at least one function (such as a function of sound playback, a function of image playback, etc.), etc.; and the data storage area may be configured to store data created during operation of the terminal device 700 (such as audio data, phone book, etc.), etc. In addition, the memory 120 may include a high-speed random access memory and may also include a non-volatile memory. For example, the memory 120 may include at least one disk storage device, a flash memory device, or other volatile solid-state memory devices. Accordingly, the memory 120 may also include a memory controller to provide access to the memory 120 performed by the processor 180 and the input unit 130.

The input unit 130 may be configured to receive input numbers or characters, and generate input signals from keyboard, mouse, joystick, optical or trackball which are related to user setting and functional control. The input unit 130 may include a touch sensitive surface 131 and other input device 132. The touch sensitive surface 131, also known as a touch screen or a track pad, may collect user's touch operations on or near the touch sensitive surface 131 (such as an operation performed by users using any suitable object or accessory such as a finger, a touch pen and the like on or near the touch sensitive surface 131), and drive a corresponding connected device according to a preset program. Optionally, the touch sensitive surface 131 may include two parts of a touch detection device and a touch controller. Here, the touch detection device detects a touching position of the user, detects a signal caused by the touch operation, and transmits the signal to the touch controller. The touch controller receives touch information from the touch detection device, transforms it into coordinates of the touch point, and sends the coordinates to the processor 180. The touch controller may also receive a command from the processor 180 and execute the command. In addition, the touch sensitive surface 131 may be realized in various types, such as resistive type, capacitive type, infrared type and surface acoustic wave type, etc. In addition to the touch sensitive surface 131, the input unit 130 may also include other input device 132. The other input device 132 may include but not limited to one or more of a physical keyboard, functional keys (such as volume control keys, switch buttons, etc.), a trackball, a mouse, and a joystick.

The display unit 140 may be configured to display information input by the user or information provided for the user and various graphical user interfaces of the terminal device 700. These graphical user interfaces may consist of graphics, texts, icons, videos, and any combination thereof. The display unit 140 may include a display panel 141, and optionally, the display panel 141 may be configured with LCD (Liquid Crystal Display), OLED (Organic Light-Emitting Diode), etc. Furthermore, the touch sensitive surface 131 may cover the display panel 141. When a touch operation on or near the touch sensitive surface 131 is detected by the touch sensitive surface 131, the touch operation is sent to the processor 180 to determine the type of touch event, and corresponding visual output will be provided on the display panel 141 by the processor 180 according to the type of touch event. Although in Fig. 25, the touch sensitive surface 131 and the display panel 141 are two separate components to realize input and output functions, in some embodiments, the touch sensitive surface 131 and the display panel 141 may be integrated to realize input and output functions.

The terminal device 700 may further include at least one kind of sensor 150, such as a light sensor, a motion sensor and other sensors. The light sensor may include an ambient light sensor and a proximity sensor. Here, the ambient light sensor may adjust the brightness of the display panel 141 according to brightness of the ambient light. The proximity sensor may turn off the display panel 141 and/or backlight when the terminal device 700 moves close to ear. As one kind of the motion sensor, a gravity acceleration sensor may detect magnitude of acceleration in each direction (typically on three axes), and may detect magnitude and direction of gravity when it is stationary, which may be used in the applications for recognizing the attitudes of the mobile phone (such as horizontal and vertical screen switching, related games, and attitude calibration of a magnetometer), functions related to vibration recognizing (such as a pedometer, and clicking), etc. The terminal device 700 may also be equipped with other sensors such as a gyroscope, a barometer, a hygrometer, a thermometer, and an infrared sensor, etc., which will not be redundantly described herein.

The audio circuit 160, a speaker 161 and a microphone 162 may provide an audio interface between the user and the terminal device 700. The audio circuit 160 may transform received audio data into electrical signals which are transmitted to the speaker 161 and transformed into sound signals to be output by the speaker 161. On the other hand, the microphone 162 transforms collected sound signals into electrical signals which are received and transformed into audio data by the audio circuit 160. After being output to the processor 180 to be processed, the audio data is transmitted to, for example, another terminal device via the RF circuit 110, or output to the memory 120 for further processing. The audio circuit 160 may also include an ear bud jack to allow a communication between an external earphone and the terminal device 700.

In order to achieve wireless communication, the terminal device may be equipped with a wireless communication unit 170 which may be a WiFi module. WiFi is a short-range wireless transmission technology. The terminal device 700 allows the user to send and receive emails, browse webpages and access streaming media, etc., through the wireless communication unit 170, which provides the user with a wireless broadband Internet access. Although Fig. 25 shows the wireless communication unit 170, it should be appreciated that, the wireless communication unit 170 is not a necessary component of the terminal device 700, and may be omitted as desired.

The processor 180 is a control center of the terminal device 700 that connects various parts of the entire mobile phone through various interfaces and circuits, performs various functions and data processing of the terminal device 700 by running or executing the software programs and/or modules stored in the memory 120 and by invoking data stored in the memory 120, so as to monitor the overall mobile phone. Optionally, the processor 180 may include one or more processing cores. The processor 180 may be integrated with an application processor that mainly processes operating systems, user interfaces and application programs, and a modem processor that mainly processes the wireless communication. It should be appreciated that, the above modem processor may not be integrated into the processor 180.

The terminal device 700 may also include a power supply 190 (such as a battery) to supply power to each component. The power supply may be logically connected to the processor 180 through a power supply management system, so as to achieve the functions such as charge, discharge and power consumption managements, etc. through the power supply management system. The power supply 190 may also include one or more components of a DC or AC power, a recharge system, a power failure detection circuit, a power converter or an inverter, and a power status indicator, etc.

Although not shown, the terminal device 700 may also include a camera, and a Bluetooth module, etc., which are not redundantly described herein. In the present embodiment, a display unit of the terminal device may be a touch screen display, and the terminal device further includes a memory and one or more programs stored in the memory, and the terminal device is configured to execute the one or more programs by one or more processors, the one or more programs including instructions to perform the following operations:
detecting a first preset gesture containing two endpoints which is acted on a message display page; and
processing the messages between the two endpoints in the message display page.

Thus, through the method, apparatus and terminal device for displaying messages according to the present disclosure, a flexible process may be provided for the user by detecting a preset gesture acted on the message display page and causing processing of the messages displayed in the message display page.

In addition, the mobile terminal according to the present disclosure may typically implemented by various handheld terminal devices, such as a mobile phone, a personal digital assistant (PDA), and the like. Therefore, the present disclosure is not limited to a particular type of mobile terminal.

In addition, the method according to the present disclosure may also be implemented by a computer program executed by a CPU. When executed by the CPU, the computer program performs the above functions defined in the method according to the present disclosure.

In addition, the above steps of the method and the units of the system may also implemented by a controller and a computer-readable storage device which stores computer programs that cause the controller to realize the above steps and functions of the units.

In addition, it should be appreciated that the above mentioned computer-readable storage device (e.g. the memory) may be a volatile memory or a nonvolatile memory, or may include the both. For example, but without limitation, the nonvolatile memory may include a read only memory (ROM), a programmable ROM (PROM), an electrically programmable ROM (EPROM), an electrically erasable programmable ROM (EEPROM), or a flash memory. The volatile memory may include a random access memory (RAM) which may serve as an external cache RAM memory. As an example, but without limitation, the RAM may be configured into various forms, such as a synchronous RAM (DRAM), a dynamic RAM (DRAM), a synchronous DRAM (SDRAM), a double data rate SDRAM (DDR SDRAM), an enhanced SDRAM (ESDRAM), a synchronous link DRAM (SLDRAM) and a direct Rambus RAM (DRRAM). The storage device according to the disclosed aspects is intended to include but not limited to these and other suitable types of memories.

It should be appreciated by those skilled in the art that, various exemplary logical blocks, modules, circuits, and algorithm steps described in conjunction with the present disclosure may be implemented as electronic hardware, computer software or combination of both. In order to clearly illustrate the interchangeability between the hardware and the software, a general description has been given to various illustrative components, blocks, modules, circuits and functions of steps. Whether such functions will be implemented as software or hardware depends on the particular application and the restriction from the design of the whole system. Those functions may be realized in various means for each of the particular application by those skilled in the art.

Various illustrative logical blocks, modules and circuits described in conjunction with the present disclosure may be implemented or performed by the following components that are designed to perform the above functions: a general purpose processor, a digital signal processor (DSP), a dedicated integrated circuit (ASIC), a field programmable gate array (FPGA) or other programmable logic device, discrete gates or transistor logics, discrete hardware components or any combination of these components. The general purpose processor may be a microprocessor. Alternatively, the processor may be any one of a conventional processor, a controller, a microcontroller, or a state machine. The processor may be implemented as a combination of computing devices, such as combination of a DSP and a microprocessor, a plurality of microprocessors, one or more microprocessors in conjunction with a DSP core, or any other such configuration.

The method and steps of the algorithm described in conjunction with the present disclosure may be directly contained in hardware, in a software module executed by a processor or in a combination of the both. The software may reside in a RAM memory, a flash memory, a ROM memory, an EPROM memory, an EEPROM memory, a registers, a hard disk, a removable disk, a CD-ROM, or any other storage medium known in the art. An exemplary storage medium is coupled to the processor such that the processor can read information from the storage medium or write information thereto. In an alternative embodiment, the storage medium may be integrated with the processor. The processor and the storage medium may reside in an ASIC which may reside in a user terminal. In an alternative embodiment, the processor and the storage medium may reside in a user terminal as discrete components.

In one or more exemplary designs, the above functions may be implemented in hardware, software, firmware, or any combination thereof. If implemented in software, the above functions may be stored in a computer readable medium as one or more instructions or codes, or transmitted through the computer readable medium. The computer readable medium includes computer storage medium and communication medium. The communication medium includes any medium that may be used to transmit computer programs from one location to another location. The storage medium may be any available medium that is accessible by a general or special computer. For example, but without limitation, the computer readable medium may include a RAM, a ROM, an EEPROM, a CD-ROM or other CD storage devices, disk storage devices or other magnetic storage devices, or any other medium that may be used to carry or store the required program codes in a form of instructions or data structure and may be accessible by a general or special computer, or a general or special processor. In addition, any connection may be appropriately referred as a computer-readable medium. For example, if a coaxial cable, a fiber optic cable, a twisted pair, a digital subscriber line (DSL) or wireless technologies such as infrared rays, radio and microwave are used to transmit software from a website, a server or other remote source, the above coaxial cable, the fiber optic cable, the twisted pair, the DSL or wireless technologies such as infrared rays, radio and microwave are all covered by the definition of the medium. As used herein, the disk and the optical disk includes a compact disk (CD), a laser disc, an optical disk, a digital versatile disc (DVD), a floppy disk, a blue-ray disk, among which the magnetic disk normally represents data magnetically, and the optical disk represents data optically by utilizing a laser. The combination of the above should also be included within the meaning of a computer readable medium.

The functions, steps and/or operations of the method claims according to the described embodiments of the present disclosure, may not necessarily be performed in a particular order. In addition, although elements of the present disclosure may be described or prescribed in a single form, multiple forms may also be devised, unless the single form is explicitly prescribed.

The objects, technical solutions and advantageous effects of the present disclosure have been explained in a further detail with the above specific embodiments. It should be appreciated that, the above are merely specific embodiments of the present disclosure, and not intended to limit the present disclosure.

## Claims

1. A method for displaying messages, comprising:
displaying messages on a touch-sensitive message display page interface (131) comprising displaying specific contents of one or more messages on the message display interface, including text and/or a picture, in a time sequence, or displaying one or more messages sorted by contact persons from or to whom messages are received or sent; and
detecting (S101) a first preset gestures of a plurality of different preset gestures containing two endpoints which is acted on the message display page interface; wherein said detecting (S101) causes processing (S102) and manipulation of the one or more messages displayed (S201; S801) between the two endpoints in the message display page, to cause, depending on the detected first preset gesture:
hiding (S205; S805) said one or more messages displayed between the two endpoints in the message display page; or
deleting said one or more messages displayed between the two endpoints in the message display page; or merging for displaying said one or more messages displayed between the two endpoints in the message display page.

2. The method according to claim 1, wherein, the different first preset gestures comprise: a gesture of inward kneading with two fingers (S202; S802), a gesture of click with two fingers, or a gesture of unidirectional sliding.

3. The method according to claim 1, wherein, the hiding (S205; S805) of said one or more messages displayed between the two endpoints in the message display page comprises: displaying after folding said one or more messages displayed between the two endpoints in the message display page.

4. The method according to claim 1, wherein, in a case that the processing of the specific contents of a message between the two endpoints in the message display page is performed by hiding (S205; S805) the message content between the two endpoints in the message display page, the method further comprises:
receiving a second preset gesture which is acted on the message display page interface in which the message content is hidden; and
displaying the hidden message content in the message display page.

5. The method according to claim 4, wherein, the second preset gesture comprises: a gesture of outward kneading with two fingers, a gesture of click, or a gesture of long press.

6. An apparatus for displaying messages on a touch-sensitive message display page interface (131) comprising displaying specific contents of one or more messages on the message display interface, including text and/or a picture, in a time sequence, or displaying one or more messages sorted by contact persons from or to whom messages are received or sent; the apparatus comprising:
a first detection module (2301), configured to detect different first preset gestures containing two endpoints which are acted on the message display page interface; and
a first process module (2302), configured to process and manipulate the one or more messages displayed (S201; S801) between the two endpoints in the message display page, on detection of one of said different first preset gestures, comprising; a first process unit, configured to hide said one or more messages displayed between the two endpoints in the message display page, and a second process unit, configured to delete said one or more messages displayed between the two endpoints in the message display page, and a third process unit, configured to merge for displaying said one or more messages displayed between the two endpoints in the message display page.

7. The apparatus according to claim 6, wherein, the different first preset gestures comprise: a gesture of inward kneading with two fingers, a gesture of click with two fingers, or a gesture of unidirectional sliding.

8. The apparatus according to claim 6, wherein, the first process unit is configured to display after folding said one or more messages displayed between the two endpoints in the message display page.

9. The apparatus according to claim 6, wherein, the apparatus further comprises:
a second detection module (2303), configured to detect a second preset gesture that is acted on the message display page in which the said one or more messages are hidden; and
a second process module (2304), configured to display said one or more hidden messages are in the message display page.

10. The apparatus according to claim 9, wherein, the second preset gesture comprises: a gesture of outward kneading with two fingers, a gesture of click, or a gesture of long press.

11. A computer program, which when executing on a processor, performs a method according to any one of claims 1 to 5.

12. The program of claim 11, when stored as a program product on a computer-readable medium.

## Patentansprüche

1. Verfahren zum Anzeigen von Nachrichten, das Folgendes beinhaltet:
Anzeigen von Nachrichten auf einer berührungsempfindlichen Nachrichtanzeigeseiten-Schnittstelle (131), die das Anzeigen von spezifischen Inhalten von einer oder mehreren Nachrichten auf der Nachrichtenanzeigeschnittstelle, einschließlich Text und/oder einem Bild, in einer Zeitsequenz, oder das Anzeigen von einer oder mehreren Nachrichten beinhaltet, die nach Kontaktpersonen sortiert sind, von oder zu denen Nachrichten empfangen oder gesendet werden; und
Erkennen (S101) einer auf der Nachrichtenanzeigeseiten-Schnittstelle ausgeführten ersten voreingestellten Geste aus mehreren unterschiedlichen voreingestellten Gesten, die zwei Endpunkte haben;
wobei das genannte Erkennen (S101) das Verarbeiten (S102) und das Manipulieren der ein oder mehreren angezeigten Nachrichten (S201; S801) zwischen den beiden Endpunkten in der Nachrichtenanzeigeseite bewirkt, um je nach der erkannten ersten voreingestellten Geste Folgendes zu bewirken:
Verbergen (S205; S805) der genannten ein oder mehreren zwischen den beiden Endpunkten in der Nachrichtenanzeigeseite angezeigten Nachrichten; oder
Löschen der genannten ein oder mehreren zwischen den beiden Endpunkten in der Nachrichtenanzeigeseite angezeigten Nachrichten; oder
Zusammenführen zur Anzeige der genannten ein oder mehreren zwischen den beiden Endpunkten in der Nachrichtenanzeigeseite angezeigten Nachrichten.

2. Verfahren nach Anspruch 1, wobei die unterschiedlichen ersten voreingestellten Gesten eine Geste des Einwärtsknetens mit zwei Fingern (S202; S802), eine Geste des Klickens mit zwei Fingern oder eine Geste des unidirektionalen Gleitens umfassen.

3. Verfahren nach Anspruch 1, wobei das Verbergen (S205; S805) der genannten ein oder mehreren zwischen den beiden Endpunkten in der Nachrichtenanzeigeseite angezeigten Nachrichten Folgendes beinhaltet: Anzeigen nach dem Falten der genannten ein oder mehreren zwischen den beiden Endpunkten in der Nachrichtenanzeigeseite angezeigten Nachrichten.

4. Verfahren nach Anspruch 1, wobei in dem Fall, dass die Verarbeitung der spezifischen Inhalte einer Nachricht zwischen den beiden Endpunkten in der Nachrichtenanzeigeseite durch Verbergen (S205; S805) des Nachrichteninhalts zwischen den beiden Endpunkten in der Nachrichtenanzeigeseite erfolgt, das Verfahren Folgendes beinhaltet:
Empfangen einer zweiten voreingestellten Geste, die auf der Nachrichtenanzeigeseiten-Schnittstelle ausgeführt wird, in der der Nachrichteninhalt verborgen ist; und
Anzeigen des verborgenen Nachrichteninhalts in der Nachrichtenanzeigeseite.

5. Verfahren nach Anspruch 4, wobei die zweite voreingestellte Geste Folgendes umfasst: eine Geste des Auswärtsknetens mit zwei Fingern, eine Geste des Klickens oder eine Geste des langen Drückens.

6. Vorrichtung zum Anzeigen von Nachrichten auf einer berührungsempfindlichen Nachrichtenanzeigeseiten-Schnittstelle (131), das das Anzeigen von spezifischen Inhalten von einer oder mehreren Nachrichten auf der Nachrichtenanzeigeschnittstelle, einschließlich Text und/oder einem Bild, in einer Zeitsequenz, oder das Anzeigen von einer oder mehreren Nachrichten beinhaltet, die nach Kontaktpersonen sortiert sind, von oder zu denen Nachrichten empfangen oder gesendet werden;
wobei die Vorrichtung Folgendes umfasst:
ein erstes Erkennungsmodul (2301), konfiguriert zum Erkennen von unterschiedlichen ersten voreingestellten Gesten, die zwei Endpunkte enthalten, die auf der Nachrichtenanzeigeseiten-Schnittstelle ausgeführt werden; und
ein erstes Verarbeitungsmodul (2302), konfiguriert zum Verarbeiten und Manipulieren der ein oder mehreren zwischen den beiden Endpunkten in der Nachrichtenanzeigeseite angezeigten Nachrichten (S201; S801), nach dem Erkennen von einer der genannten verschiedenen ersten voreingestellten Gesten, das Folgendes umfasst:
eine erste Verarbeitungseinheit, konfiguriert zum Verbergen der genannten ein oder mehreren zwischen den beiden Endpunkten in der Nachrichtenanzeigeseite angezeigten Nachrichten, und
eine zweite Verarbeitungseinheit, konfiguriert zum Löschen der genannten ein oder mehreren zwischen den beiden Endpunkten in der Nachrichtenanzeigeseite angezeigten Nachrichten, und
eine dritte Verarbeitungseinheit, konfiguriert zum Zusammenführen zum Anzeigen der genannten ein oder mehreren zwischen den beiden Endpunkten in der Nachrichtenanzeigeseite angezeigten Nachrichten.

7. Vorrichtung nach Anspruch 6, wobei die unterschiedlichen ersten voreingestellten Gesten Folgendes umfassen: eine Geste des Einwärtsknetens mit zwei Fingern, eine Geste des Klickens mit zwei Fingern, oder eine Geste des unidirektionalen Gleitens.

8. Vorrichtung nach Anspruch 6, wobei die erste Verarbeitungseinheit zum Anzeigen, nach dem Falten, der genannten ein oder mehreren zwischen den beiden Endpunkten in der Nachrichtenanzeigeseite angezeigten Nachrichten konfiguriert ist.

9. Vorrichtung nach Anspruch 6, wobei die Vorrichtung ferner Folgendes umfasst:
ein zweites Erkennungsmodul (2303), konfiguriert zum Erkennen einer zweiten voreingestellten Geste, die auf der Nachrichtenanzeigeseite ausgeführt wird, in der die genannten ein oder mehreren Nachrichten verborgen sind; und
ein zweites Verarbeitungsmodul (2304), konfiguriert zum Anzeigen der genannten ein oder mehreren verborgenen Nachrichten in der Nachrichtenanzeigeseite.

10. Vorrichtung nach Anspruch 9, wobei die zweite voreingestellte Geste Folgendes umfasst: eine Geste des Auswärtsknetens mit zwei Fingern, eine Geste des Klickens oder eine Geste des langen Drückens.

11. Computerprogramm, das bei Ausführung auf einem Prozessor ein Verfahren nach einem der Ansprüche 1 bis 5 durchführt.

12. Programm nach Anspruch 11, wenn es als Programmprodukt auf einem computerlesbaren Medium gespeichert ist.

## Revendications

1. Un procédé d'affichage de messages, comprenant :
l'affichage de messages sur une interface de page d'affichage de messages tactile (131) comprenant l'affichage de contenus spécifiques d'un ou de plusieurs messages sur l'interface d'affichage de messages, contenant du texte et/ou une image, dans une séquence temporelle, ou l'affichage d'un ou de plusieurs messages triés par personnes de contact à partir desquelles ou auxquelles des messages sont reçus ou envoyés, et
la détection (S 101) d'un premier geste prédéfini d'une pluralité de gestes prédéfinis différents contenant deux points d'extrémité qui est effectué sur l'interface de page d'affichage de messages,
où ladite détection (S101) entraîne le traitement (S 102) et la manipulation des un ou plusieurs messages affichés (S201; S801) entre les deux points d'extrémité dans la page d'affichage de messages, de façon à entraîner, en fonction du premier geste prédéfini détecté :
le masquage (S205; S805) desdits un ou plusieurs messages affichés entre les deux points d'extrémité dans la page d'affichage de messages, ou
la suppression desdits un ou plusieurs messages affichés entre les deux points d'extrémité dans la page d'affichage de messages, ou
la fusion en vue d'un affichage desdits un ou plusieurs messages affichés entre les deux points d'extrémité dans la page d'affichage de messages.

2. Le procédé selon la Revendication 1, où les premiers gestes prédéfinis différents comprennent : un geste de pinçage vers l'intérieur avec deux doigts (S202; S802), un geste de clic avec deux doigts ou un geste de glissement unidirectionnel.

3. Le procédé selon la Revendication 1, où le masquage (S205; S805) desdits un ou plusieurs messages affichés entre les deux points d'extrémité dans la page d'affichage de messages comprend : l'affichage après pliage desdits un ou plusieurs messages affichés entre les deux points d'extrémité dans la page d'affichage de messages.

4. Le procédé selon la Revendication 1, où, dans le cas où le traitement des contenus spécifiques d'un message entre les deux points d'extrémité dans la page d'affichage de messages est exécuté par le masquage (S205; S805) du contenu de message entre les deux points d'extrémité dans la page d'affichage de messages, le procédé comprend en outre :
la réception d'un deuxième geste prédéfini qui est effectué sur l'interface de page d'affichage de messages dans laquelle le contenu de message est masqué, et
l'affichage du contenu de message masqué dans la page d'affichage de messages.

5. Le procédé selon la Revendication 4, où le deuxième geste prédéfini comprend : un geste de pinçage vers l'extérieur avec deux doigts, un geste de clic ou un geste de pression longue.

6. Un appareil d'affichage de messages sur une interface de page d'affichage de messages tactile (131) comprenant l'affichage de contenus spécifiques d'un ou de plusieurs messages sur l'interface d'affichage de messages, contenant du texte et/ou une image, dans une séquence temporelle, ou l'affichage d'un ou de plusieurs messages triés par personnes de contact à partir desquelles ou auxquelles des messages sont reçus ou envoyés,
l'appareil comprenant :
un premier module de détection (2301), configuré de façon à détecter des premiers gestes prédéfinis différents contenant deux points d'extrémité qui sont effectués sur l'interface de page d'affichage de messages, et
un premier module de traitement (2302), configuré de façon à traiter et manipuler les un ou plusieurs messages affichés (S201; S801) entre les deux points d'extrémité dans la page d'affichage de messages, après détection d'un desdits premiers gestes prédéfinis différents, comprenant :
une première unité de traitement, configurée de façon à masquer lesdits un ou plusieurs messages affichés entre les deux points d'extrémité dans la page d'affichage de messages, et
une deuxième unité de traitement, configurée de façon à supprimer lesdits un ou plusieurs messages affichés entre les deux points d'extrémité dans la page d'affichage de messages, et
une troisième unité de traitement, configurée de façon à fusionner en vue d'un affichage lesdits un ou plusieurs messages affichés entre les deux points d'extrémité dans la page d'affichage de messages.

7. L'appareil selon la Revendication 6, où les premiers gestes prédéfinis différents comprennent : un geste de pinçage vers l'intérieur avec deux doigts, un geste de clic avec deux doigts ou un geste de glissement unidirectionnel.

8. L'appareil selon la Revendication 6, où la première unité de traitement est configurée de façon à afficher après pliage lesdits un ou plusieurs messages affichés entre les deux points d'extrémité dans la page d'affichage de messages.

9. L'appareil selon la Revendication 6, où l'appareil comprend en outre :
un deuxième module de détection (2303), configuré de façon à détecter un deuxième geste prédéfini qui est effectué sur la page d'affichage de messages dans laquelle lesdits un ou plusieurs messages sont masqués, et
un deuxième module de traitement (2304), configuré de façon à afficher lesdits un ou plusieurs messages masqués dans la page d'affichage de messages.

10. L'appareil selon la Revendication 9, où le deuxième geste prédéfini comprend : un geste de pinçage vers l'extérieur avec deux doigts, un geste de clic ou un geste de pression longue.

11. Un programme informatique, qui, lorsqu'il est exécuté sur un processeur, exécute un procédé selon l'une quelconque des Revendications 1 à 5.

12. Le programme selon la Revendication 11, lorsqu'il est conservé en mémoire sous la forme d'un produit de programme sur un support lisible par ordinateur.
